# EUROPEAN PATENT APPLICATION

(11) **EP 4 215 497 A1**
(43) Date of publication of application: **26.07.2023**
(21) Application number: 20953635.8
(22) Date of filing: 17.09.2020
(51) Int. Cl.: C02F 9/02, C02F 1/28, C02F 1/40

(54) **METHOD AND APPARATUS FOR PROLONGING CONTINUOUS OPERATION PERIOD OF METHANOL-TO-OLEFINS WATER WASHING PROCESS**

(71) Applicant: East China University of Science and Technology, Shanghai 200237 (CN); Shanghai Huachang Environmental Protection Co., Ltd., Shanghai 201611 (CN); Sinopec Guangzhou Engineering Co., Ltd., Guangzhou, Guangdong 510620 (CN)
(72) Inventor: LV, Wenjie, Shanghai 200237 (CN); WANG, Hualin, Shanghai 200237 (CN); CHEN, Jianqi, Shanghai 200237 (CN); LIU, Yu, Guangzhou, Guangdong 510620 (CN); SHI, Lei, Guangzhou, Guangdong 510620 (CN); QIAO, Ligong, Guangzhou, Guangdong 510620 (CN); ZHANG, Jie, Guangzhou, Guangdong 510620 (CN); CHANG, Guoping, Guangzhou, Guangdong 510620 (CN); LIU, Bing, Shanghai 200237 (CN); CUI, Xin, Shanghai 201611 (CN); SANG, Weichi, Shanghai 201611 (CN); WANG, Jinsong, Shanghai 201611 (CN); MA, Hongpeng, Shanghai 200237 (CN); YUAN, Wei, Shanghai 200237 (CN); JI, Yujie, Shanghai 200237 (CN)
(74) Representative: Taylor, Gail
(86) International application number: PCT/CN2020/115855
(87) International publication number: WO 2022/056777

(57) **Abstract**

The present disclosure relates to a method and apparatus for prolonging a continuous operation period of a methanol-to-olefins water washing process, and provides a method for prolonging a continuous operation period of a methanol-to-olefins water washing process. The method comprises the following steps: (i) performing micro cyclone treatment on methanol-to-olefins washing water; (ii) delivering the washing water subjected to micro cyclone treatment and oil removal to a fluidized bed separator for treatment; (iii) adjusting the backwash flow to release the intercepted catalyst powder and empty the dirt holding capacity of a pore; (iv) performing three-phase separation on a gas-liquid-solid mixture subjected to backwash, returning the obtained filter media to a particle bed layer, and respectively discharging a backwashing liquid a backwashing gas which comprise a catalyst; and (v) after the backwash is ended, switching the fluidized bed separator to a normal working state, completing the active regeneration of the particle bed layer, and continuing to operate. Also provided is an apparatus for prolonging a continuous operation period of a methanol-to-olefins water washing process.

## Description

### Technical Field

The present disclosure pertains to the field of comprehensive treatment of environmental pollution, and relates to a method for removing oil/fat and catalyst particles from washing water in a methanol-to-olefins process by long-period operation of a microcyclone separator and a fluidized bed separator, especially suitable for stable continuous operation of the separation equipment to reduce post-cleaning and maintenance of the related devices. Particularly, by combining cyclone separation and granular bed separation as well as the backwashing technology, the present disclosure provides a method and an apparatus for combinatorial separation of methanol-to-olefins washing water in long-period operation, as well as a comprehensive method for treatment of waste liquid and waste gas, and recovery of residual heat from supernate of washing water generated in regeneration of the separation device.

### Background Art

Manufacture of olefins from methanol, referred to as MTO (Methanol to Olefins), refers to a process for preparation of low-carbon olefins by catalytic reaction using methanol as a raw material. The reaction is generally implemented in a fluidized bed reactor, and the catalyst currently used is 200 nm - 20 µm SAPO-34 molecular sieve. The high-temperature product gas in the reactor is sent to a quench tower after the catalyst powder is recovered by a three-stage cyclone separator. The gas is cooled to about 109 °C by the quench tower, then sent to a water washing tower for washing, and then sent to an olefin separation unit after washing. Due to the limited separation accuracy of the cyclone separator, a portion of the fine catalyst powder having a particle diameter of less than 10 µm is sent to the quench tower together with the product gas. At the same time, oxygen-containing organic compounds such as unreacted methanol and dimethyl ether, and a small amount of intermediate reaction product (oil-wax substances, more than 90% of which are aromatic hydrocarbons) will enter the quench tower and the water washing tower together with the reaction gas. Due to the high operating temperature of the quench tower and the short contact time between the product gas and the quench water, most of the catalyst fine powder can be washed off in the quench tower, while most of the oxygen-containing organic compounds and oil-wax substances enter the washing water. Since a certain amount of water is generated during the reaction process, wastewater is condensed in the water washing tower. The wastewater is high-temperature wastewater (85-95°C) which generally contains 0.5 µm - 20 µm SAPO-34 molecular sieve catalyst powder, a small amount of oxygen-containing organic compounds such as methanol and dimethyl ether, and oil-wax substances dominated by aromatic hydrocarbons (oil content: 200-700 mg/L).

In practical production, in order to control the oil content of the washing water, an oil trap is provided in the washing tower, and the floating oil in the water is trapped in the oil trap by controlling the liquid level and then discharged from the washing tower. However, in practical operation, the oil content of the washing water is still as high as 150-300 mg/L after oil separation, such that severe wax deposition occurs in the low-temperature area of the washing water circulation system. As a result, the washing water heat exchanger, the air cooler and the water washing tower trays are blocked severely, which badly affects the long-period stable operation of the apparatus and results in a low heat transfer efficiency of the heat transfer system which thus requires frequent cleaning. At the same time, due to the emulsification of the oil in the washing water to some extent, the cyclone deoiler cannot remove the oil and wax from the water completely. Because a fairly amount of oil and wax is left in the water, and there is still fine catalyst powder having a small particle diameter, the filter element of the precision filter for the washing water is very easy to be clogged, such that the apparatus cannot run normally. In addition, the entry of the catalyst particles into the stripping tower will also affect the stable operation of the stripping tower, so it is very important to find an efficient separation method for removing oil and solid.

At present, the common methods for removing solid and oil from wastewater mainly include physical methods, chemical methods, physical-chemical methods and biological methods. The physical methods mainly include gravity method, centrifugal separation method, precision filtration method, membrane separation method, etc. The gravity method has poor separation accuracy, and cannot remove emulsified oil from washing water. The separating effect is poor when the centrifugal separation method is used to separate fine oil droplets or sub-micron particles. Because particles having a small particle diameter and a small amount of oil-wax present in the MTO washing water can easily enter the channels of the filter element of a precision filtration device, they block the channels, and can hardly be removed by online backwashing. The membrane separation method is widely used in recent years due to its excellent separating effect, but it has the disadvantages of easy blockage, high maintenance fee and high cost due to the high solid content and oil content of MTO washing water. The chemical methods mainly include flocculation method, oxidation method, electrochemical method, etc. The flocculation method has poor treatment effect on emulsified oil and fine particles. In addition, the treatment agents are expensive, and it is easy to produce secondary pollution. Chemical oxidants such as ozone, Fenton reagent and the like may be used to degrade organics in wastewater to improve biodegradability, but the treatment cost is high. The electroflocculation method needs to consume a large quantity of auxiliary salt reagents and electricity, and the operating cost is high. The physical-chemical methods mainly include air flotation method, adsorption method, coagulation method, etc. The air flotation method needs to consume chemicals, and needs a large footprint. The adsorbent used in the adsorption method has a limited adsorption capacity and a high cost, and its regeneration is difficult. The coagulation method is simple in operation, and needs a small footprint, but a coagulant needs to be added, and the cost is high. Although the biochemical method has a low cost, a low investment and no secondary pollution, it needs a large footprint. In addition, the methanol-to-olefins wastewater contains a high concentration of pollutants and a large amount of organic components, which will affect the normal operation of the biochemical tank.

With respect to the process for removing solid and oil from methanol-to-olefins washing water, Chinese Patent Application CN104649446A proposes solid-liquid separation of methanol-to-olefins washing water and quench water with the use of a filter separation unit comprising three or more multi-channel rotary valves connected in parallel. However, according to the report on the experiments therein, the filter separation unit is mainly used to treat catalyst particles having a particle diameter of 3 µm or more, and the removal effect for catalyst particles smaller than 3 µm is not very good. Moreover, as a low-cost, widely used mechanical device, the rotary valve is mainly used for feeding, dust removal, and unloading in the world at present, and it nearly does not have the function of removing oil from washing water.

Chinese Patent Application CN103951098A proposes use of an ultrafiltration membrane to separate and purify washing water, and recovery of catalyst with a three-phase separator. This application utilizes the relatively advanced membrane separation technology to treat the washing water and recover the catalyst particles to promote economic benefits. However, this application shows that the diameter of the membrane used is 5-200 nm, so relatively fine treatment is effectuated on fine particles. If washing water characterized by a high flow rate and a high oil content is treated, it is very easy to increase pressure difference. As a result, the treatment efficiency will decrease. Moreover, the filter unit consists of filter membranes connected in series. Due to the high solid content and oil content of the concentrated liquid during backwashing, the filter membranes connected in series increase the pressure difference, which is not conducive to stable continuous operation of the large flow rate treatment process.

Chinese Patent Applications CN102093153A and CN101352621A propose use of the microcyclone technology to perform microcyclone separation on methanol-to-olefins quench water to remove catalyst particles entrained therein. A microcyclone separator has the advantages of wide adaptability, low cost, easy maintenance, etc. It has a higher separation efficiency than an ordinary cyclone separator having a separation accuracy of 5-10 µm. However, it has the problem that its separation efficiency is limited for fine particles of 3 µm or smaller, especially for extremely fine particles of 1 µm or smaller. Due to its structural characteristics, clogging, high pressure drop and other problems may occur easily, which increases energy consumption and the difficulty of later cleaning and maintenance. In addition, the washing water contains a large amount of oxygen-containing compounds and oil/wax, and thus the separating effect of the microcyclone separator on the oil fraction is limited. The oil/fat and extremely fine particles in the wastewater constitute a factor that renders the operation of the subsequent stripping process unstable.

In summary, the requirements for treating highly concentrated methanol-to-olefins waste water containing oil and solid cannot be satisfied by the traditional physical methods due to the high cost or poor treatment effect, or by the traditional chemical methods due to the secondary pollution caused by the consumption of chemicals and the difficulty in recycling water after treatment, or by the traditional physical-chemical methods due to the consumption of chemicals and high operating cost, or by the traditional biochemical methods due to the slow treatment speed and the poor adaptability of active sludge. Therefore, there is an urgent need for a simple and effective treatment process to address the poor separating effect of the existing methods.

### Summary

The present disclosure provides a novel apparatus and a novel method for prolonging a continuous operation period of a methanol-to-olefins washing water treatment process, thereby solving the problems existing in the prior art.

The present disclosure provides an apparatus and a method for prolonging a continuous operation period of a methanol-to-olefins washing water treatment process, thereby achieving the object of reducing the oil content and solid content of washing water efficiently and prolonging the stable operation period of the apparatus at the same time. The method is simple and effective, and addresses the technical defects in the existing process that the filtering device is susceptible to clogging and needs frequent cleaning; the continuous operation time is short; and the oil/wax and solid particles in the water cannot be removed completely.

In one aspect, the present disclosure provides a method for prolonging a continuous operation period of a methanol-to-olefins washing water treatment process, comprising the following steps:
(i) subjecting methanol-to-olefins washing water to microcyclone treatment to remove free oil from the water;
(ii) sending the washing water deoiled by microcyclone to a fluidized bed separator for treatment to remove emulsified oil, dispersed oil and fine catalyst powder from the water, wherein the fluidized bed separator runs continuously until an accumulated operating pressure difference reaches 0.05-0.3 MPa, and then the washing water is fed for backwashing, optionally nitrogen gas is further added to mix with the washing water for backwashing, so as to fully fluidize a granular bed of the fluidized bed separator to a boiling state;
(iii) adjusting a backwash flow rate to 50-90 m³/h to release intercepted catalyst powder and clear dirt contained in voids;
(iv) subjecting a gas-liquid-solid mixture generated by the backwashing to three-phase separation, wherein a resulting filter material is returned to the granular bed, and a backwash liquid entraining the catalyst and a backwash gas are discharged separately; and
(v) switching the fluidized bed separator to a normal working state after the backwashing is finished, so that activity regeneration of the granular bed is accomplished, and operation continues.

In a preferred embodiment, the method further comprises: (vi) sending a part of the washing water treated by the fluidized bed separator to a reboiler under a propylene rectification tower of an olefin separating device as a heat source for partial recovery of residual heat of the washing water, and returning it to the water washing tower after heat exchange; and sending another part to a sewage stripping tower for stripping treatment.

In another preferred embodiment, a working temperature of the methanol-to-olefins washing water is 85 °C or higher; a content of solid catalyst particles is 0.1-1.0g/L; an average particle diameter of the solid catalyst particles is 0.5-5 µm; and a content of the oil in the washing water is 200-700 mg/L.

In another preferred embodiment, after the treatment by the fluidized bed separator, a water content of an oil phase in the washing water is reduced to 10% or lower; a content of the oil is reduced to 30 mg/L or lower; a content of solid suspensions is reduced to 20 mg/L or lower; a separation accuracy is D₈₅=0.1 µm.

In another preferred embodiment, the medium used in the granular bed is a multi-shape granular filter material having a particle diameter of 0.2 mm - 3 mm, wherein a dirt holding rate is higher when a degree of sphericity is lower and a particle diameter is smaller; and a self-rotational regeneration efficiency is higher when a degree of sphericity is higher and a particle diameter is larger.

In another preferred embodiment, raw washing water enters from a bottom of the fluidized bed separator to drive the granular bed to a boiling state, wherein a flow rate for the backwashing is 10-20 m/h; wherein a concentrated liquid generated by the backwashing is discharged and allowed for gravity settling, wherein water-containing waste at a lower layer is dewatered by pressure filtration for recycling.

In another aspect, the present disclosure provides an apparatus for prolonging a continuous operation period of a methanol-to-olefins washing water treatment process, comprising:
a microcyclone separator for subjecting methanol-to-olefins washing water to microcyclone treatment to remove free oil from the water; and
a fluidized bed separator in communication with the microcyclone separator for treating the washing water deoiled by microcyclone to remove emulsified oil, dispersed oil and fine catalyst powder from the water.

In a preferred embodiment, the apparatus further comprises:
a settling tank in communication with the microcyclone separator for settling the washing water discharged from the microcyclone separator to achieve oil-water separation;
a buffer tank in communication with the fluidized bed separator for storing the washing water purified by the fluidized bed separator;
a stripping tower in communication with the buffer tank for stripping the washing water treated by the fluidized bed separator; and
a reboiler under a propylene rectification column of an olefin separation device in communication with the buffer tank for using the washing water treated by the fluidized bed separator as a heat source to recover part of residual heat of the washing water, and/or
a pressure filtration unit in communication with the fluidized bed separator for dewatering water-containing waste at a lower layer of the fluidized bed separator by pressure filtration for recycling.

In a preferred embodiment, the fluidized bed separator is a combination of a three-phase separator and a granular bed, wherein the medium used in the granular bed is a combination of multi-size and multi-shape granular filter materials arranged in series.

In another preferred embodiment, after a particle diameter gradient of particles used for the medium varies by 50% or more, a rotation intensity of the particles increases at the same flow rate; and when a rotation speed reaches 1500 rpm or higher, the granular bed has an improved regeneration efficiency.

### Beneficial effects:

According to the present invention, a combination of a microcyclone separator and a fluidized bed separator is used to remove solid and oil from methanol-to-olefins washing water, and backwashing is designed to realize particle regeneration by clearing off the dirt held by the particles. Preferably, the oil content is reduced to 50 mg/L or lower; the solid content is reduced to 50 mg/L or lower; and the residual rate of the dust after backwashing in the washing water is reduced to 5% or lower as required. The requirements of high removal efficiency, long operation period, easy maintenance and stable operation of downstream equipment are satisfied. At the same time, the present disclosure effectuates comprehensive treatment of waste liquid and waste gas, and recovery of residual heat from supernate of washing water generated in regeneration of the purification device, and thus achieves near-zero emission of pollutants, near-zero landfill of waste, and effective use of heat.

### Description of the Drawings

The accompanying drawings are provided for further understanding of the disclosure. They constitute a part of the specification only for further explanation of the disclosure without limiting the disclosure.
Fig. 1 is a schematic process flow chart of the method for prolonging the continuous operation period of the methanol-to-olefins washing water treatment process according to a preferred embodiment of the present disclosure.
Fig. 2 is a schematic process flow chart of the method for prolonging the continuous operation period of the methanol-to-olefins washing water treatment process according to another preferred embodiment of the present disclosure.
FIG. 3 is a schematic view showing a processing flow for discharging waste water from a washing water purification device to a sewage treatment plant according to a preferred embodiment of the present disclosure.
Fig. 4 is a flow rate monitoring diagram for maintaining continuous operation of the device in a pilot test by backwashing according to a preferred embodiment of the present disclosure.
Fig. 5 is a schematic view illustrating the principle of backwashing in a fluidized bed separator according to a preferred embodiment of the present disclosure.

The reference numbers in the figures are described as follows:
1-1. Reactor, 1-2. Regenerator, 1-3. Quench tower, 1-4. Water washing tower, 1-5. Microcyclone separator, 1-6. Settling tank, 1-7. Fluidized bed separator, 1-8. Buffering tank, 1-9. Reboiler under propylene rectification column of olefin separating device, 1-10. Stripping tower, 1-11. Pressure filtration unit;
2-1. Oil trap; 2-2. Air flotation pool; 2-3. Biochemical unit; 2-4. Aerated biological filtration pool; 2-5. Sand filtration unit.

### Detailed Description

Based on the study on the microscopic movement of fine particles, the regulation of the structural alignment, the regularity of particle aggregation and the regulation of the mechanism of capture of the microdispersed phase by the particles, the inventors of the present application have developed the fluidized bed separation technology, wherein the collision and adsorption functions of the separating medium, and the high-precision interception function of the microchannels formed by the separating medium are utilized to effectively remove the fine particles and some oily organic substances in the washing water. The microchannel separation is different from the membrane separation. Because the microchannels are not fixed, include long passages and have a large capacity for pollutants, the problem of blockage by pollutants can be avoided effectively. For systems such as methanol-to-olefins washing water which has a large operating flow rate, a high oil content and a low solid content, entrains fine catalyst particles of a small particle diameter (usually 1-10 µm), and easily clogs a treatment device which thus cannot operate stably, microcyclone separation is a cheap, economical, easy-to-use, widely applicable and effective treatment method. Compared with an ordinary cyclone separator, according to the current international standard, a microcyclone separator can generally remove fine catalyst particles of 6 µm or larger, but its removal efficiency is just moderate for ultra-fine particles of 5 µm or smaller. When two or more microcyclone separators are combined for enhancement, the separation efficiency can be much higher than that of the ordinary cyclone separator, and particles of 5 µm or smaller can be separated and recovered. However, washing water has a high content of oil which is relatively viscous and adheres to the inner wall of the microcyclone, so that separation is not good. Moreover, the catalyst particles entrained in the washing water mostly have a particle diameter of 1-10 µm, and the content of catalyst particles having a particle diameter of 3 µm or less is not high. It's found in industrial experimentation and practice that the entrainment of very fine catalysts often accelerates the clogging of the separator, so that a higher frequency of device cleaning is required. This is not conducive to circulating use of recycled wastewater. The inventors have contemplated development of a deep granular bed filter to separate the ultrafine particles and oil in the washing water. The process combining microcyclone separation and fluidized bed separation is expected to effectively solve the problems of incomplete separation, easy blockage, frequent equipment cleaning, and short continuous operation cycle found in the existing methanol-to-olefins washing water circulation system.

The technical concept of the present invention is as follows:

The methanol-to-olefins washing water is pre-separated by a microcyclone separator. After the separation, the washing water further enters a fluidized bed separator for deep filtration. The deoiled and filtered washing water enters a buffer tank for recycling or stripping treatment. After the fluidized bed separator runs continuously until the accumulated operating pressure difference reaches a certain value, raw washing water is introduced from the outlet of the fluidized bed separator for backwashing to bring the granular medium to a boiling state. The medium particles rotate at a high speed and collide with each other, thereby releasing the intercepted substances and regenerating the filtration activity of the medium. Hence, the dirt holding capacity of the fluidized bed separator is promoted again. Consequently, equipment blockage and repeated cleaning and maintenance are reduced significantly, and the washing water purification process continues to run stably.

In one aspect according to the present disclosure, a method for prolonging the continuous operation period of a methanol-to-olefins washing water treatment process is provided, comprising:
drawing washing water entraining catalyst particles such as SAPO-34, oil phase substances such as aromatic hydrocarbons, and reaction gases such as methanol from a bottom of a washing tower through a centrifugal pump, and subjecting it to pre-separation by a microcyclone separator to remove free oil from the water;
sending oil-rich wastewater separated by the microcyclone separator to a settling tank to further separate an oil phase from a water phase, wherein the oil phase is used for refining treatment;
discharging the washing water deoiled by the microcyclone separator from the bottom of the microcyclone separator, and feeding it into a fluidized bed filter together with the wastewater separated from the settling tank, wherein the remaining capillary oil (emulsified oil, dispersed oil) that is difficult to separate is filtered off owing to the interception and adsorption functions of the separation medium particles, while the extremely fine catalyst particles are filtered out of the washing water;
switching the fluidized bed filter to the backwashing state when the accumulated pressure difference of the granular bed in the fluidized bed filter reaches a certain value, wherein the deoiled washing water is mixed with nitrogen gas, and fed into the fluidized bed filter reversely from the raw water outlet of the fluidized bed filter to backwash the filter material in the bed, so that the filter material is brought to a boiling state;
adjusting the backwash flow rate to enable full rotation and collision of the filter material, so as to release the adsorption space of the channels, and accelerate removal of the substances intercepted by the filter material and the surface pollutants;
maintaining the rotational speed of the particles at 1500 rad/s (rps) or higher by graded combination of different filter media, wherein a media combination with a low degree of sphericity and a wide particle diameter distribution can increase the rotational speed within a certain range and accelerate regeneration;
returning the filter material to the bed after it is separated from the gas-liquid-solid mixture generated by the backwashing through a three-phase separator, and discharging the backwash liquid entraining the catalyst and the backwash gas from the top liquid phase and gas phase outlets, respectively; and
switching the fluidized bed filter to the working state for filtration, and closing the backwash discharge ports after backwashing for a period of time.

Preferably, the backwash flow rate is adjusted to 50-90 m³/h.

Preferably, the flow rate is increased during the backwashing, so that the granular media rotate and collide under the drive of the liquid flow, and the removal of pollutants on the surface and in the channels is accelerated, wherein the concentrated liquid generated by the backwashing is discharged from the liquid phase outlet of the three-phase separator at the top of the granular bed filter, and after gravity settlement, the concentrated liquid at the bottom can be processed and recovered by dewatering techniques such as pressure filtration.

Preferably, the pressure difference rises slowly and is less than 0.1MPa within the first 8 hours of continuous operation; and the backwashing is performed once per 10 hours of operation to regenerate the activity of the filter material, wherein after the backwashing, the variations of the operation flow rate and the pressure difference are consistent with those at the initial time.

Preferably, in the process of removing the oil and solid, the deoiled and filtered washing water is temporarily stored in a buffer tank, a part of which is cooled and then returned to the water washing tower for recycling, and another part of which is sent to a stripping tower for stripping treatment to separate purified water and oil phase.

Preferably, the purification method includes three separation processes combined in series: microcyclone separation, granular bed filtration and subsequent stripping tower treatment.

Preferably, the working temperature of the washing water is 85-95 °C; the solid particles are fine powders of methanol-to-olefins catalyst particles, usually SAPO-34 molecular sieve powder; the solid content is 0.1-0.5 g/L; and the average particle diameter is 0.5-5 µm.

Preferably, the separation purification consists of microcyclone separation and deep granular bed separation, wherein the microcyclone separation can preliminarily separate larger particles, and the granular bed separation removes extremely fine particles and oil/wax components such as aromatics.

Preferably, the treatment capacity for the washing water is 35-65 m³/h; the backwash flow rate is 10-20 m/s; and the particle rotation speed is 1500 rad/s or higher, so as to complete regeneration of the activity of the particles.

Preferably, the backwashing effect is good: the initial solid concentration of the backwashing liquid reaches 3.2wt.%, but the solid particle concentration drops to 287 mg/L after backwashing for 1 min, while the residual rate of the catalyst on the surface of the filter material is 5% or lower after the backwashing, showing that effective regeneration is achieved.

Preferably, the oil content of the washing water is 200-700 mg/L. After the combined purification by the cyclone deoiling and the deep mechanical filtration, the oil content of the water is reduced to 50 mg/L or lower, and the content of solid suspensions is reduced to 50 mg/L or lower. The separation accuracy of the fluidized bed is D₈₅=0.1 µm.

In another aspect according to the present disclosure, there is provided an apparatus for prolonging the continuous operation period of a methanol-to-olefins washing water treatment process, comprising:
a microcyclone separator for pre-separation of large catalyst particles and oil/fat entrained in washing water;
a settling tank in communication with the microcyclone separator for treating oil-rich wastewater separated by the microcyclone separator;
a fluidized bed separator in communication with the microcyclone separator, wherein a deep granular bed filter is provided therein for secondary purification of the washing water after separation by the microcyclone separation, and can be in communication with a nitrogen inlet, a settling tank, a buffer tank and a dewatering device such as a pressure filter; wherein a three-phase separator is provided in the fluidized bed separator for separation and recovery of the concentrated liquid and the solid filter material obtained by backwashing the deep granular bed filter;
a buffer tank in communication with the fluidized bed separator for storing the filtrate of the washing water, so that the apparatus is in stable continuous operation; and
a stripping tower in communication with the buffer tank for stripping the washing water after the microcyclone separation and the deep granular bed filtration.

Preferably, the apparatus consists of the microcyclone filter and the fluidized bed separator (the three-phase separator and the deep granular bed filter) connected in series.

Preferably, the pressure loss of the microcyclone separator is 0.15-0.30 MPa, and the pressure loss of the deep granular bed filter is 0.01-0.30 MPa.

### Preferably, the media of the deep granular bed filter are multi-size and multi-shape granular filter materials combined in series and having a particle diameter in the range of 0.2 mm - 3 mm, such as quartz sand, anthracite, fruit shell, activated carbon, and carbon spheres. For example, 1-2 mm anthracite particles and 0.5-1.0 mm quartz sand particles combined in series may be used; 1-2 mm quartz sand particles, 0.5-1.0 carbon sphere particles and 0.3-0.5 mm quartz sand particles combined in series may be used; etc.

Reference will be now made to the accompanying drawings.

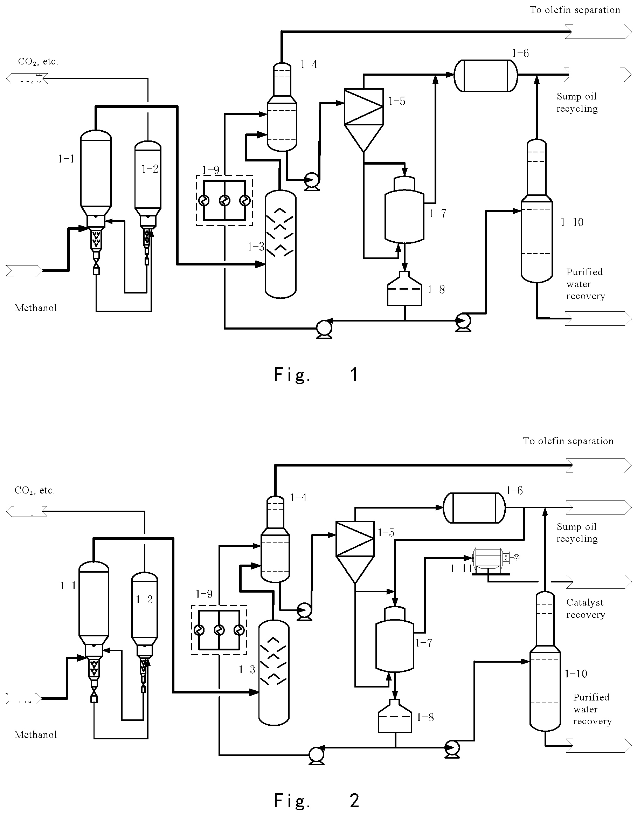

Fig. 1 is a schematic process flow chart of the method for prolonging the continuous operation period of the methanol-to-olefins washing water treatment process according to a preferred embodiment of the present disclosure, suitable for working conditions with high oil content and low solid content. As shown by Fig. 1, after methanol is fed into the reactor 1-1 for reaction, the methanol-to-olefins reaction gas entraining catalyst particles, etc. is discharged from the top outlet of the reactor 1-1, enters the quench tower 1-3 for reaction, and is then sent to the water washing tower 1-4 for washing. The reaction gas from which the catalyst is removed exits the water washing tower from the top, and is then subjected to separation of olefins. The catalyst after the reaction is discharged from the bottom outlet of the reactor 1-1 and sent to the catalyst regeneration tower 1-2 for regeneration. The resulting gas (CO₂, etc.) is discharged from the top outlet of the regeneration tower 1-2. The regenerated catalyst is discharged from the bottom outlet of the regeneration tower 1-2 and returned to the reactor 1-1. Water and the fine catalyst particles washed out are discharged from the bottom of the washing tower to obtain washing water. The washing water is pumped out by a centrifugal pump and sent to the microcyclone separator 1-5. A large amount of washing water entraining oil/fat is discharged from the overflow port, and sent to the settling tank 1-6 for settling to accomplish oil-water separation. The oil obtained is combined with the oil from the stripping tower 1-10 and subjected to sump oil refining. The washing water entraining the catalyst and remaining oil/fat is discharged from the bottom outlet, and sent to the fluidized bed separator 1-7 for secondary purification. The washing water deeply purified by the granular bed is temporarily stored in the buffer tank 1-8, a part of which is sent, together with the washing water from the settling tank which has accomplished the oil-water separation, to the stripping tower 1-10 for stripping treatment, and another part of which is sent to the reboiler 1-9 under a propylene rectification column of an olefin separation device as a heat source to partially recover the residual heat of the washing water, and sent to the washing tower 1-4 for recycling after the heat exchange. The purified water obtained from the stripping tower 1-10 is recovered. During the process, the liquid level in the buffer tank is stabilized at 1/2 or higher to maintain stable operation of the apparatus during backwashing. When the pressure difference rises to a certain value, the apparatus is switched to the backwashing state. The washing water from the bottom of the microcyclone separator is input together with nitrogen gas into the fluidized bed separator from the raw water outlet at the bottom of the fluidized bed separator to bring the particles to a boiling state, so that the particles rotate and collide to achieve regeneration. The concentrated liquid generated by the backwashing is discharged from the liquid phase outlet of the three-phase separator at the top of the fluidized bed separator, and sent to the settling tank 1-6 for separation; and the backwash gas is discharged from the fluidized bed separator 1-7, dewatered by a cyclone dewatering tank, and sent to a torch unit to burn the gaseous organic matter carried out during the regeneration of the fluidized bed to achieve near-zero emission of pollutants. After the backwashing is finished, the regeneration of the granular bed filter material is accomplished. The washing water from the bottom of the microcyclone separator is input again from the upper inlet of the fluidized bed separator 1-7. The apparatus is switched to the normal working state.

Fig. 2 is another schematic process flow chart of the method for prolonging the continuous operation period of the methanol-to-olefins washing water treatment process according to a preferred embodiment of the present disclosure, suitable for working conditions with low oil content and high solid content. Unlike the process shown by Fig. 1, after the microcyclone separation, the settled water is also subjected to secondary purification in the granular bed, and used as another stream of waste water recycled to the water washing tower. In the backwashing process, the concentrated liquid from the fluidized bed is not sent to the settling tank, but treated separately. A sampling port is set at the water outlet of the buffer tank. When the water sample meets the discharge conditions (petroleum substances ≤ 20 mg/L, COD ≤ 1200 mg/L, BOD ≤ 5500 mg/L), the water can be discharged directly without passing through the stripping tower.

As compared with the process shown by Fig. 1, in the process shown by Fig. 2, the concentrated backwash liquid is treated separately. It may undergo a series of processes such as settling, centrifugal separation or drying/dewatering to accomplish purification of the waste liquid and recycling of the catalyst. The discharge is more environmentally friendly. At the same time, when the water sample is qualified, the wastewater can be discharged directly, which greatly reduces the expense and energy consumption in connection with the use of the stripping tower.

As shown by Fig. 2, after methanol is fed into the reactor 1-1 for reaction, the methanol-to-olefins reaction gas is discharged from the top outlet of the reactor 1-1. The reaction gas and the particles entrained thereby enter the quench tower 1-3 for reaction, and are then sent to the water washing tower 1-4 for washing. The catalyst after the reaction is discharged from the bottom outlet of the reactor 1-1 and sent to the catalyst regeneration tower 1-2 for regeneration. The resulting gas (CO₂, etc.) is discharged from the top outlet of the regeneration tower 1-2. The regenerated catalyst is discharged from the bottom outlet of the regeneration tower 1-2 and returned to the reactor 1-1. The olefins and the like are discharged from the top of the washing tower 1-4 and then subjected to separation of the olefins. The washing water in the tower is pumped out by a centrifugal pump and sent to the microcyclone separator 1-5. The oil-rich water is discharged from the overflow port and sent to the settling tank 1-6 for settling to accomplish recycling of sump oil. The solid-containing washing water is discharged from the bottom flow port, and sent together with the water phase in the settling tank to the fluidized bed separator 1-7 for secondary purification. The washing water and settled water deeply purified by the granular bed are temporarily stored in the buffer tank 1-8, a part of which is sent to the reboiler 1-9 under a propylene rectification column of an olefin separation device as a heat source to partially recover the residual heat of the washing water, and sent to the washing tower 1-4 for recycling after the heat exchange, and another part of which is sent to the stripping tower 1-10 for stripping treatment. The purified water obtained from the stripping tower 1-10 is recovered, and the oil obtained is subjected to sump oil recycling together with the oil from the settling tank 1-6. The liquid level in the buffer tank is maintained at 1/2 or higher, so that the water circulation and the treatment process can proceed normally during backwashing. When the pressure difference rises to a certain value, the apparatus is switched to the backwashing state. The concentrated backwash liquid is discharged from the liquid phase outlet of the three-phase separator at the top of the fluidized bed separator, settled, and sent to the pressure filtration unit 1-11 for pressure filtration to recover the catalyst and achieve near-zero landfill of waste. The waste water generated by the pressure filtration unit 1-11 and containing a trace amount of oil and solid is sent to a sewage treatment plant. After removing the organic matter and suspended matter from the waste water, the qualified water is discharged to the environment or reused. The backwash gas is discharged from the fluidized bed separator 1-7, dewatered by a cyclone dewatering tank, and sent to a torch unit to burn the gaseous organic matter carried out during the regeneration of the fluidized bed to achieve near-zero emission of pollutants. After the backwashing is finished, the regeneration of the granular bed filter material is accomplished. The washing water from the bottom of the microcyclone separator is input again from the upper inlet of the fluidized bed separator. The apparatus is switched to the normal working state. When the water sample taken from the buffer tank meets the standards (petroleum substances ≤ 20 mg/L, COD ≤ 1200 mg/L, BOD ≤ 5500 mg/L), the water can be discharged directly without treatment by the stripping tower.

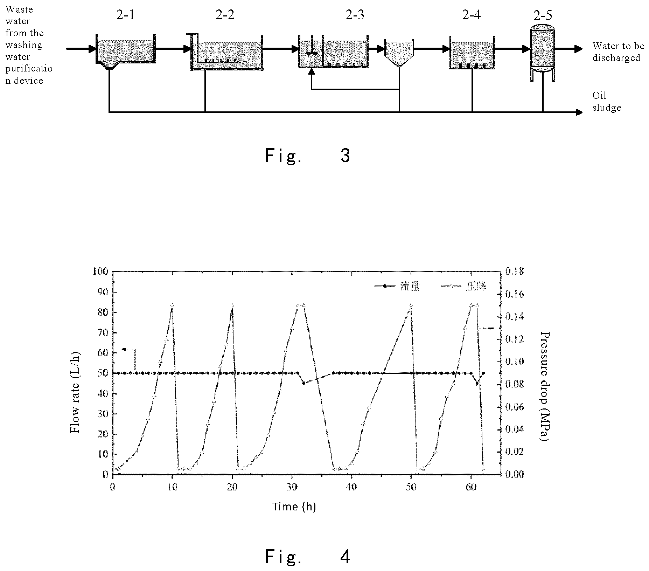

FIG. 3 is a schematic view showing a processing flow chart of a washing water purification device discharging waste water to a sewage treatment plant according to a preferred embodiment of the present disclosure. As shown by FIG. 3, the average flow of the wastewater discharged from the washing water purification device to the sewage treatment plant is 3t/h. The wastewater from the washing water purification device is first sent to an oil trap 2-1 in which the suspended matter and oil are initially separated from the wastewater by way of the difference of the suspended matter, oil and water in specific gravity. The wastewater treated by the oil trap 2-1 is sent to an air flotation pool 2-2 in which the suspended floccules and small oil droplets in the wastewater further flocculate and grow, and combine with the bubbles released by the aerated water to form large floccules that rise to the water surface under the action of buoyancy and rising water, thereby further separating the oil and solids in the wastewater. After the air flotation treatment, the waste water is sent to a biochemical unit 2-3 in which COD (chemical oxygen demand) substances, ammonia nitrogen, oil/fat and the like are removed from the wastewater by microbial degradation. Then, the wastewater is sent to an aerated biological filtration pool 2-4 in which the COD substances, ammonia nitrogen, oil/fat, suspended matter and the like are further removed from the wastewater by means of the oxidative degradation function of the biofilm on the surface of the filter material and the interception function of the filter material in the filter tank. Finally, the wastewater is sent to a sand filtration unit 2-5 for deep removal of the suspended matter from the wastewater, and then the water is drained or reused. Sludge is discharged from the bottoms of the oil trap 2-1, the air flotation pool 2-2, the biochemical unit 2-3, the aerated biological filtration pool 2-4 and the sand filtration unit 2-5.

Fig. 4 is a flow rate monitoring diagram for maintaining continuous operation of the device in a pilot test by backwashing according to a preferred embodiment of the present disclosure, showing the flow rate variation in the pilot test in which the fluidized bed separator according to the present invention realizes stable continuous operation for more than 60 h with the help of backwashing. As shown by Fig. 4, in the first 8 hours of continuous operation, the pressure difference rises slowly, and the pressure difference is < 0.1 MPa. After backwashing, the activity of the media achieves outstanding regeneration, and stable continuous operation can be realized while ensuring high-efficiency separation.

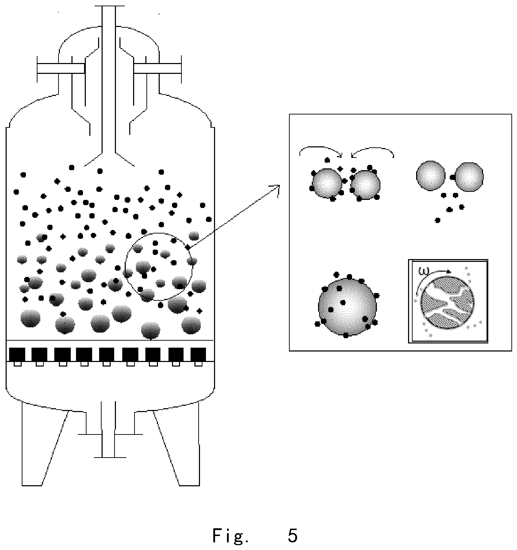

Fig. 5 is a schematic view illustrating the principle of backwashing a fluidized bed separator according to a preferred embodiment of the present disclosure. As shown by Fig. 5, the particles in the bed rotate and collide to realize removal of pollutants and regeneration of the media channels. In this figure, ω represents the particle rotation speed.

### Examples

The present disclosure will be further illustrated with reference to the following specific Examples. It is nevertheless to be appreciated that these Examples are only intended to exemplify the present disclosure without limiting the scope of the present disclosure. The test methods in the following examples for which no specific conditions are indicated will be carried out generally under conventional conditions or under those conditions suggested by the manufacturers. Unless otherwise specified, all parts are parts by weight, and all percentages are percentages by weight.

### Example 1:

### 1. Implementation overview

In a 1.8 million tons/year methanol-to-olefins process, the method of the present invention was employed, wherein a fluidized bed purification device was used to purify washing water containing solid catalyst and oil fraction, so as to realize removal of spent catalyst particles.

### 2.Material properties and processing methods

The methanol-to-olefins washing water was a liquid-solid two-phase mixture. The water contained solid catalyst particles and oil. The main components of the oil were high-concentration aromatic hydrocarbons resistant to degradation. The treatment amount of the washing water was 35-65 m³/h. The operating temperature was 90 °C. The content of the spent catalyst was 0.1-0.5 g/L, and its average particle size was 2.0 µm. The oil content was 200-700 mg/L.

As regards the 1.8 million tons/year methanol-to-olefins process under study, the main measures currently taken in the prior art include continuous discharge of the washing water at a flow rate of 160 t/h, replenishing of fresh water to balance the solid content and oil content in the washing water, and continuous infusion of xylene to alleviate settling of the catalyst and oil-based organic matter and blockage caused by them. Although such measures can alleviate the blockage of the methanol-to-olefins water system, the water consumption is large, and the economy is poor. In addition, the load of the downstream stripping tower is increased, and the heat of the discharged wastewater is difficult to be used. For example, if washing water is discharged at 90°C, when it is cooled to ambient temperature of 25°C, the heat loss of 1 ton of wastewater is about 270 MJ. If the washing water is discharged at 160 t/h, the daily heat loss is 1036800 MJ, equivalent to 35.4 tons of standard coal/day. Therefore, the measures adopted currently are disadvantageous in terms of safety, environmental protection and economy.

### 3. Fluidized bed purification device

The diameter of the device was 2.4 m, and the height was about 6 m. A three-phase separator was installed at the top of the device to recover the filter material during backwashing, and at the same time discharge the backwash liquid and backwash nitrogen. The filter material in the bed included 0.2 mm - 3 mm spherical particle filter materials such as quartz sand, anthracite, fruit shell, activated carbon, alumina particles, carbon spheres or ceramic spheres. The particle shape of the filter material may also be an irregular shape such as column, tetrahedron, etc., and the effect is better. The bed height was 0.8 - 1.5 m, and the treatment capacity per unit was 50 m³/h. 6 units were used in parallel, and 2 units were used in a group. They were switched in turn for backwashing.

### 4. Implementation process

The methanol-to-olefins washing water containing fine catalyst powder was pumped by a centrifugal pump to the microcyclone separator for preliminary separation, and then entered the fluidized bed separator group to remove fine particles and residual oil from the water. There were 6 fluidized bed separators (units) divided into three groups working in parallel, one group of which was on standby. When the device ran continuously till the pressure difference rose to 0.2 MPa, the separators were switched to backwashing and normal washing operations in turn, and then continued to run.

### 5. Experimental results

The specific separation conditions are shown in Table 1 below:

**Table 1: Separation parameters**

| | Inlet | Outlet |
|---|---|---|
| Oil content (mg/L) | 200-700 | 30-60 |
| Solid content (mg/L) | 100-1000 | 50-80 |
| Particle diameter distribution (µm) | 0.2-10.0 | 0.2-2.0 |
| Major organics | Aromatics 68.45% (hexamethyl benzene: 24.56%) | Aromatics 43.695% (hexamethyl benzene: 2.095%) |
| Separation efficiency (%) | Separation efficiency for 1 µm or larger particles 70%-99% | |
| | Separation efficiency for 0.5 µm or smaller particles 70%-99% | |

As it can be seen from Table 1, the apparatus combining cyclone separation and fluidized bed separation in sequence has an excellent separation effect on particulate matter and oil in the methanol-to-olefins washing water. After the particles are regenerated by backwashing to a boiling state, the activity of the particles is well promoted.

### 6. Technical effects

In recent years, microcyclone separation, metal membrane separation, ceramic membrane separation and bag filtration have been gradually applied in the purification process of methanol-to-olefins wastewater. Based on domestic field research, the inventors of the present application have discovered that the above methods all have certain deficiencies. Thus, the purification of methanol-to-olefins wastewater has always been a big challenge that is difficult to be addressed in the MTO industry. Microcyclones and metal membranes are employed in more than 10 sets of MTO equipment. These two devices are generally operated in series, wherein the microcyclone is used for primary separation, and the metal membrane is used for deep purification. The separation precision of the microcyclone separator is low. It only shows a good separating effect on particles larger than 3 microns, and it has difficulty in separating particles smaller than 3 microns. Due to the problem of membrane fouling in metal membrane microfiltration, the membrane flux will be reduced to 20% or less of the normal membrane flux within one month of operation, rendering it difficult to operate normally. Ceramic membranes and bag filters are added in technical transformation in some MTO plants. Ceramic membranes are effective in filtering fine particles in methanol-to-olefins wastewater, but the equipment cost is high, and the pressure across the membrane is high. In addition, the problem of membrane channel blockage will gradually arise after more than one year of operation. Currently, ceramic membranes are used in 3 sets of MTO equipment for wastewater purification. Due to the low separation precision and short life of the bag filtration method, the treatment efficiency will be significantly reduced after one year of operation, and this problem needs to be solved by replacing the filter bag. This method is used in only one MTO plant.

Compared with the technologies that have been applied, the fluidized bed separation technology is second only to the ceramic membrane separation technology in terms of separation efficiency. Nevertheless, the fluidized bed separation technology is based on the principle of deep filtration, and the filtration channels are formed by accumulation of loose filter material particles. As a result, the channels are variable. In principle, the problem of fouling and clogging of metal membranes or ceramic membranes is avoided. The granular bed of the filter material has a large porosity, and the particles to be filtered can be accommodated in the voids between the filter material particles. Hence, the pollutant holding capacity of the granular bed is large, and the granular bed needs to be backwashed notably less frequently than the surface filtration methods such as metal membrane filtration and ceramic membrane filtration. On the other hand, since the channels are variable, the pollutants retained in the channels can be released easily. In addition, cyclone is introduced to strengthen the flushing, so the pollutants can be easily detached from the surface of the filter material. Therefore, the filter material can be regenerated more effectively than a traditional deep filtration device. Additionally, since the filter material can be selected from traditional anthracite, carbon spheres and the like which are cheap in price, the equipment investment and maintenance fee are very low.

A comparison of several methanol-to-olefins wastewater treatment technologies in industrial applications (based on a treatment capacity of 200m³/h) is shown in Table 2 below. The fluidized bed separation technology is superior to the other technologies in terms of equipment investment, handling expenses, operating costs, sewage discharge frequency, and separation energy consumption. Its separation efficiency is second only to that of the ceramic membrane technology and is sufficient for separation of fine catalyst particles in MTO water system. Nonetheless, it needs a larger space than the other technologies. A comprehensive assessment shows that the fluidized bed separation technology has excellent performance in purification of MTO wastewater, so it is more suitable for industrial treatment of MTO wastewater.

**Table 2: Comparison of different MTO wastewater purification technologies**

| Technology name | Fluidized bed separation | Microcyclone separation | Metal membrane | Ceramic membrane | Bag filtration |
|---|---|---|---|---|---|
| Separation efficiency (%) | 90-99 | 20-60 | 95-99 | >99 | 30-60 |
| Pressure drop (MPa) | 0.2-0.3 | 0.2-0.3 | 0.2-0.5 | 0.3-0.6 | 0.2-0.5 |
| Footprint (m²) | 70-80 | 30-40 | 35-45 | 35-45 | 35-45 |
| Water recycling rate (%) | 98 | 95 | Unable to operate normally | 90 | 90 |
| Backwash cycle (h) | 24-96 | No backwash | <1 | 2-8 | 3-5 |
| Equipment investment (million dollars) | 0.8-1.0 | 0.6-0.8 | 1.5-1.8 | 2.2-2.8 | 1.4-1.7 |
| Maintenance fee (thousand dollars) | 8-12 | 8-12 | Unable to operate normally | 500-1000 | 100-120 |

According to the present disclosure, the method in which a microcyclone separator and a fluidized bed separator are combined is used to remove solid and oil from the methanol-to-olefins washing water. In cooperation with the backwash design of the fluidized bed, the particles are regenerated to such an extent that the amount of the pollutants trapped therein is reduced to almost zero. The following requirements are well satisfied: the oil content in washing water should be reduced to 50 mg/L or less; the solid content should be reduced to 50 mg/L or less; and the residual rate of dust after backwashing should be reduced to 5% or less. The requirements of high removal efficiency, long operation period, easy maintenance and stable operation of downstream equipment are also satisfied. At the same time, recycling of water, further sump oil recycling, concentration and recovery of the catalyst, harmless treatment of the waste gas produced in the regeneration process, and partial recovery of the residual heat of the washing water are realized. As such, the comprehensive treatment of the methanol-to-olefins washing water is fulfilled. Moreover, the original 160t/h washing water discharge can be eliminated. In the case that the washing water is used as a heat source for the reboiler under the propylene rectification tower in the olefin separation unit to recover part of the residual heat, assuming that the washing water is discharged at 90 °C, when it is cooled to 65 °C due to the residual heat recovery, the heat recovered is about 100 MJ per ton of wastewater. Based on discharge of the washing water at 160 t/h, 384000 MJ of heat per day can be saved, equivalent to 13.1 tons of standard coal per day. In addition, the washing water containing oil and solids is highly concentrated organic wastewater resistant to degradation. When it is discharged to a sewage treatment plant at a flow rate of 160t/h according to the prior art, the cost of sewage treatment will be increased. Now, according the present disclosure, the wastewater discharged to the sewage treatment plant is mainly produced by the pressure filtration unit and contains a trace amount of oil and solids, and the average discharge is 3t/h. Assuming that the treatment cost is 10 Yuan per ton of water, 12.56 million Yuan/year can be saved for treatment of the washing water.

The Examples listed above are only preferred examples in the disclosure, and they are not intended to limit the scope of the disclosure. Equivalent variations and modifications according to the disclosure in the scope of the present application for invention all fall in the technical scope of the disclosure.

All of the documents mentioned in the disclosure are incorporated herein by reference, as if each of them were incorporated herein individually by reference. It is to be further understood that various changes or modifications to the disclosure can be made by those skilled in the art after reading the above teachings of the disclosure, and these equivalent variations fall in the scope defined by the accompanying claims of the application as well.

## Claims

1. A method for prolonging a continuous operation period of a methanol-to-olefins washing water treatment process, comprising the following steps:
(i) subjecting methanol-to-olefins washing water to micro-cyclone treatment to remove free oil from the water;
(ii) sending the washing water deoiled by microcyclone to a fluidized bed separator for treatment to remove emulsified oil, dispersed oil and fine catalyst powder from the water, wherein the fluidized bed separator runs continuously until an accumulated operating pressure difference reaches 0.05-0.3 MPa, and then the washing water is fed for backwashing, optionally nitrogen gas is further added to mix with the washing water for backwashing, so as to fully fluidize a granular bed of the fluidized bed separator to a boiling state;
(iii) adjusting a backwash flow rate to 50-90 m³/h to release intercepted catalyst powder and clear dirt contained in voids;
(iv) subjecting a gas-liquid-solid mixture generated by the backwashing to three-phase separation, wherein a resulting filter material is returned to the granular bed, and a backwash liquid entraining the catalyst and a backwash gas are discharged separately; and
(v) switching the fluidized bed separator to a normal working state after the backwashing is finished, so that activity regeneration of the granular bed is accomplished, and operation continues.

2. The method according to claim 1, further comprising: (vi) sending a part of the washing water treated by the fluidized bed separator to a reboiler under a propylene rectification column of an olefin separating device as a heat source for partial recovery of residual heat of the washing water, and returning it to the water washing tower after heat exchange; and sending another part to a sewage stripping tower for stripping treatment.

3. The method according to claim 1 or 2, wherein a working temperature of the methanol-to-olefins washing water is 85 °C or higher; a content of solid catalyst particles is 0.1-1.0g/L; an average particle diameter of the solid catalyst particles is 0.5-5 µm; and a content of the oil in the washing water is 200-700 mg/L.

4. The method according to claim 3, wherein after the treatment by the fluidized bed separator, a water content of an oil phase in the washing water is reduced to 10% or lower; a content of the oil is reduced to 30 mg/L or lower; a content of solid suspensions is reduced to 20 mg/L or lower; a separation accuracy is D₈₅=0.1 µm.

5. The method according to claim 1 or 2, wherein a medium used in the granular bed is a multi-shape granular filter material having a particle diameter of 0.2 mm - 3 mm, wherein a dirt holding rate is higher when a degree of sphericity is lower and a particle diameter is smaller; and a self-rotational regeneration efficiency is higher when a degree of sphericity is higher and a particle diameter is larger.

6. The method according to claim 1 or 2, wherein raw washing water enters from a bottom of the fluidized bed separator to drive the granular bed to a boiling state, wherein a flow rate for the backwashing is 10-20 m/h; wherein a concentrated liquid generated by the backwashing is discharged and allowed for gravity settling, wherein a water-containing waste at a lower layer is dewatered by pressure filtration for recycling.

7. An apparatus for prolonging a continuous operation period of a methanol-to-olefins washing water treatment process, comprising:
a microcyclone separator (1-5) for subjecting methanol-to-olefins washing water to microcyclone treatment to remove free oil from the water; and
a fluidized bed separator (1-7) in communication with the microcyclone separator (1-5) for treating the washing water deoiled by microcyclone to remove emulsified oil, dispersed oil and fine catalyst powder from the water.

8. The apparatus according to claim 7, wherein the apparatus further comprises:
a settling tank (1-6) in communication with the microcyclone separator (1-5) for settling the washing water discharged from the microcyclone separator (1-5) to achieve oil-water separation;
a buffer tank (1-8) in communication with the fluidized bed separator (1-7) for storing the washing water purified by the fluidized bed separator (1-7);
a stripping tower (1-10) in communication with the buffer tank (1-8) for stripping the washing water treated by the fluidized bed separator (1-7); and
a reboiler (1-9) under a propylene rectification column of an olefin separation device in communication with the buffer tank (1-8) for using the washing water treated by the fluidized bed separator as a heat source to recover part of residual heat of the washing water, and/or
a pressure filtration unit (1-11) in communication with the fluidized bed separator (1-7) for dewatering water-containing waste at a lower layer of the fluidized bed separator (1-7) by pressure filtration for recycling.

9. The apparatus according to claim 7 or 8, wherein the fluidized bed separator is a combination of a three-phase separator and a granular bed, wherein a medium used in the granular bed is a combination of multi-size and multi-shape granular filter materials arranged in series.

10. The apparatus according to claim 9, wherein after a particle diameter gradient of particles used for the medium varies by 50% or more, a rotation intensity of the particles increases at the same flow rate; and when a rotation speed reaches 1500 rpm or higher, the granular bed has an improved regeneration efficiency.
